# EUROPÄISCHE PATENTSCHRIFT

(11) **EP 2 235 287 B1**
(45) Veröffentlichungstag und Bekanntmachung des Hinweises auf die Patenterteilung: **17.09.2014**
(21) Anmeldenummer: 09700815.5
(22) Anmeldetag: 09.01.2009
(51) Int. Cl.: E04G 21/12, D07B 1/18, F16G 11/02

(54) **SEILSCHLAUFENHALTERUNG**
ROPE LOOP MOUNTING
MAINTIEN POUR BOUCLE DE CÂBLE

(30) Priorität: 11.01.2008 DE 202008000529 U
(43) Veröffentlichungstag der Anmeldung: 06.10.2010
(73) Patentinhaber: Philipp GmbH, 63741 Aschaffenburg (DE)
(72) Erfinder: DEWEID, Michael, 64319 Pfungstadt (DE)
(74) Vertreter: WSL Patentanwälte Partnerschaft mbB
(86) Internationale Anmeldenummer: PCT/EP2009/050219
(87) Internationale Veröffentlichungsnummer: WO 2009/087222

(56) Entgegenhaltungen:
- CH-A- 174 732
- DE-U1- 8 716 994
- DE-U1- 20 306 280
- DE-U1-202007 011 243
- US-A- 931 754
- US-A- 2 438 101
- US-A- 4 414 711
- US-A- 5 210 973

## Beschreibung

Die vorliegende Erfindung betrifft eine Vorrichtung für die abgewinkelte Halterung einer Stahlseilschlaufe, wie sie häufig bei der Herstellung von Wandelementen in der Bauindustrie verwendet werden, nach dem Oberbegriff des Anspruchs 1, sowie eine abgewinkelte Stahlseilschlaufe nach dem Oberbegriff des Anspruchs 8.

Eine entsprechende Vorrichtung zur abgewinkelten Halterung einer Seilschlaufe und eine entsprechende abgewinkelte Seilschlaufe sind bekannt aus der DE 203 06 280 U1 und aus der DE 20 2007 011 243 U1.

Eine übliche Methode zum Verbinden von Wandelement und Trägern eines Gebäudes, welches aus Stahlbeton teilweise aus vorgefertigten Wandelementen hergestellt wird, besteht darin, in die Schalungen entsprechender Wandelemente und auch in die Schalungen von Trägem sogenannte Seilschlaufen einzubringen. Derartige Seilschlaufen bestehen aus einem Abschnitt eines Stahlseils, das typischerweise eine Gesamtlänge von zum Beispiel 50 bis 100 cm hat und dessen freie Enden parallel zusammengelegt und zum Beispiel durch eine Quetschhülse miteinander verbunden sind, so daß der mittlere Abschnitt des Seiles die entsprechende Seilschlaufe in Form einer länglichen, an einem Ende runden und am anderen Ende spitz zulaufenden Öse bildet. Diese Seilschlaufe wird so in die Schalung eingebracht, daß die freien, zusammengehaltenen Enden des Seils im Inneren der Schalung liegen und mit dem Beton vergossen werden, während die Öse mit einer Länge von typischerweise 8 bis 15 cm Länge aus der Kante eines gegossenen Wandelements hervorsteht. Diese Kante bzw. Kantenfläche ist oftmals noch strukturiert und hat die Form einer parallel zur Plattenebene verlaufenden Nut. Dabei stehen die Seilschlaufen bzw. deren Ösen aus dem Grund der Nut hervor und sie sind für den Transport und die Handhabung und im allgemeinen auch während des Betonierens in der Schalung gegenüber dem sich in das Wandelement hinein erstreckenden Abschnitt rechtwinklig abgewinkelt, so daß die Öse sich in der Nut und im wesentlichen parallel zu dem Grund der Nut erstreckt. Vor dem Verbinden entsprechender Elemente werden diese Seilschlaufen bzw. deren Ösen aus ihrer rechtwinklig abgewinkelten Stellung herausgeklappt, so daß die von den Seilschlaufen gebildeten Ösen benachbarter Wandelemente und/oder Stützen einander überlappen und ein gerader Bewehrungsstab durch die miteinander fluchtenden Ösen von Seilschlaufen benachbarter Wandelemente/Stützen hindurchgeschoben werden kann. Dieser Grenzbereich bzw. Fugenbereich zwischen benachbarten Wandelementen oder zwischen Wandelementen und Stützen wird anschließend vergossen, wodurch ein sicherer Verbund zwischen den Wandelementen bzw. Wandelementen und Stützen hergestellt wird.

Da entsprechende Stahlseile elastisch sind und im allgemeinen die Tendenz haben, sich in ihre mehr oder weniger geradlinige Ausgangsstellung zu strecken, sind spezielle Halter dafür vorgesehen, den die Öse bildenden Abschnitt der Seilschlaufe gegenüber den parallelen Seilenden, die in die Wand oder einen Träger eingelassen sind, in einer typischerweise um etwa 90° abgewinkelten Stellung zu halten.

Hierzu sind teilweise spezielle Kunststoffhalterungen vorgesehen, durch welche entsprechende Seilschlaufen hindurchgeführt bzw. in welche die Seilschlaufen in abgewinkelter Form eingelegt werden (siehe DE 20 2007 011 243 U1). Diese Kunststoffhalter sind ihrerseits in Seilschlaufenkästen oder Seilschlaufenschienen untergebracht, die gemeinsam mit den Seilschlaufen in eine Schalung eingelegt werden, um die freien Enden der Seilschlaufen mit dem entsprechenden Betonteil zu vergießen.

Derartige Kunststoffhalter zur Halterung von Seilschlaufen müssen in einer entsprechenden Spritzgußform gegossen werden, sie müssen außerdem den von den Seilschlaufen ausgehenden Spannungskräften standhalten und schließlich noch mit entsprechenden Seilschlaufenkästen oder - schienen verbunden werden.

Diese Kunststoffhalter sind relativ teuer und aufwendig in der Herstellung.

In anderen Fällen sind neben Kunststoff-Klemmelementen noch spezielle Führungen, Randabkantungen oder dergleichen an einem Verwahrkasten vorgesehen (Siehe DE 203 06 280U1), um die relative steife Seilschlaufe in der abgewinkelten Form zu halten.

Aus der US 2,438,101 A1 ist eine Halterung für die Schnüre von Jalousien bekannt, die aus einem S-förmig ausgestanzten Flachmaterial, insbesondere aus einer S- förmig gestanzten Blechplatte be-steht. Parallele Schnüre sind durch die S-Ösen hindurchgeführt und werden so zusammengehalten.

Die US 931,754 zeigt ein in der Draufsicht E-förmiges Verbindungsglied für Seilschlaufen, bei welchem ein Seilabschnitt von verschiedenen Seiten her und nacheinander durch die beiden Ösen hindurchgeführt ist, welche durch die E-Struktur definiert werden, während ein freies Ende des Seiles mit einer zusätzlichen geschlossenen Öse an einem Ende des E-förmigen Verbindungsgliedes befestigt ist, so dass das Verbindungsglied das Seil in einer Schlaufenform hält.

Eine ähnliche Vorrichtung ist aus der CH 174 732 bekannt.

Die letztgenannten Vorrichtungen können zwar Seile in Schlaufenform halten, sind jedoch nicht geeignet und insbesondere auch nicht dafür vorgesehen, ein Paar von parallelen Stahlseilabschnitten, die gemeinsam eine Seilschlaufe bilden, in einer abgewinkelten Position der Seilschlaufenebene relativ zu den freien Endabschnitten des Seiles zu halten, wie dies für das Vergiessen mit Betonplatten in der Bauindustrie benötigt wird.

Es besteht daher ein Bedarf an einfachen oder verbesserten Halterungen für abgewinkelte Seilschlaufen, die in der Handhabung einfach und außerdem kostengünstig sind, ebenso wie an durch entsprechende Halterungen abgewinkelte Seilschlaufen.

Diese Aufgabe wird gemäß der vorliegenden Erfindung durch eine Halterung mit den Merkmalen des Anspruchs 1 und eine abgewinkelte Stahlseilschlaufe mit den Merkmalen des Anspruchs 8 gelöst.

Mit anderen Worten, die erfindungsgemäße Halterung besteht aus einem im wesentlichen S-förmigen Bügel, wobei die S-Form durch zwei an gegenüberliegenden Seiten offene Rechtecke gebildet wird, die eine Seite gemeinsam haben und bei denen lediglich die Eckbereiche abgerundet sind. Das "S" wird dabei durch mehr oder weniger geradlinige Abschnitte definiert, die lediglich gekrümmte Übergänge aufweisen und wobei mindestens eines der freien Enden der S-Form zusätzlich nochmals einen senkrecht zu der Ebene der durch die S-Form gebildeten Ösen abgewinkelten Endabschnitt aufweist.

Die Begriffe "horizontal" und "vertikal" beziehen sich dabei auf die übliche Orientierung des Buchstaben "S", wobei aber diese S-Form, wie bereits erwähnt, aus zwei an einer jeweils einer Seite offenen und eine gemeinsame Seite aufweisenden Rechtecken besteht und ähnlich wie bei einer Darstellung auf einer digitalen Matrix drei parallele horizontale und zwei vertikale Abschnitte aufweist, die von denen jeweils einer zwei der drei horizontalen Abschnitte miteinander verbindet.

Es versteht sich, daß eine hierzu spiegelbildliche Ausbildung von dieser Definition umfaßt sein soll, wobei auch Ausführungsformen in Form eines "E" oder hierzu spiegelbildlich einer "3" in ähnlicher Weise funktionsfähig wären und von der Erfindung umfaßt sein sollen. Dabei hat sich allerdings die S-Form bzw. deren Spiegelbild gegenüber der E-Form und deren Spiegelbild als besser geeignet und leichter herstellbar erwiesen.

Ein entsprechender Seilschlaufenhalter definiert durch je zwei horizontale und den sie verbindenden vertikalen Abschnitt ein rechteckiges, an drei Seiten geschlossenes und an einer Seite offenes "Auge", welches so bemessen und ausgestaltet ist, daß zwei parallele Abschnitte eines Seils in diese Augen einlegbar sind. Die zwei parallelen Abschnitte einer Seilschlaufe werden dementsprechend derart in die Augen eines solchen S-förmigen (oder auch E-förmigen) Bügels eingelegt, daß die beiden Seilabschnitte in einer seitlichen Draufsicht auf den Bügel oberhalb der bei den äußeren horizontalen Abschnitte und unterhalb des mittleren horizontalen Abschnitts oder aber umgekehrt unterhalb der beiden äußeren horizontalen Abschnitte und oberhalb des mittleren horizontalen Abschnitts verlaufen. Dies bedeutet, daß die beiden Abschnitte des Seils von entgegengesetzten Seiten her durch die entsprechenden "Augen" des Bügels hindurchgeführt sind.

Dabei hat die S-Form gegenüber einer E-Form den Vorteil, daß sie aus einem draht- bzw. stabförmigen geradlinigen Element durch Biegen hergestellt werden kann, was im Fall der E-Form nicht so einfach möglich ist. Bei Verwendung von beispielsweise faserverstärktem Kunststoff, der im Spritzgußverfahren oder durch Formextrusion verarbeitet werden kann, als Material für den Haltebügel ist aber die E-Form in gleicher Weise einfach herstellbar wie die S-Form und dementsprechend ähnlich gut geeignet.

Zweckmäßig ist es dabei, wenn die durch die beiden Augen des S- oder E-förmigen Bügels definierten Ebenen zusammenfallen oder anders gesprochen, wenn alle horizontalen und vertikalen Abschnitte der S- oder E-Form in derselben Ebene liegen. Gemäß einer anderen Ausführungsform ist es jedoch auch möglich, daß die beiden Ebenen der Augen gegeneinander abgewinkelt sind, was einer Drehung des einen Auges gegenüber dem anderen um eine Achse entspricht, die entlang des mittleren horizontalen Abschnitts verläuft.

Der Einfachheit halber werden im Folgenden nur die S-förmigen Haltebügel diskutiert, wobei entsprechende Merkmale und Eigenschaften in analoger Weise für die E-Form mitzudenken sind.

Durch das erwähnte Abwinkeln der Ebenen der beiden Augen kann man erreichen, daß ein und derselbe S-förmige Bügel für Seilschlaufen geeignet ist, die aus unterschiedlichen Seilen, insbesondere Seilen mit unterschiedlichen Querschnitten, bestehen. Durch die Abwinkelung der Augen des Seilschlaufenhalters verlaufen die parallelen Seilabschnitte bei einer Blickrichtung entlang des horizontalen mittleren Bügels des "S" bei einer Abwinkelung der Öse um 90° im wesentlichen entlang eines Viertelkreises, mit einem äußeren und einem inneren Krümmungsradius, deren Differenz dem Durchmesser der Seile entspricht. Dabei hat der äußere Viertelkreis Berührungspunkte mit den beiden äußeren Bügeln und der innere Viertelkreis berührt den mittleren Bügel. Demzufolge hängt der Winkel, um welchen die betreffende Seilschlaufe abgewinkelt ist, nicht nur von dem Abstand der horizontalen Abschnitte der S-Form, sondern auch von dem Durchmesser der hindurchgeführten Seilabschnitte ab. Abweichungen von einem 90°-Winkel können dann gegebenenfalls durch Abwinkelung der Ebenen der S-Augen kompensiert werden, so daß ein und dieselbe Bügelgröße für unterschiedliche Seilstärken verwendet werden kann, wobei zur Anpassung an verschiedene Seilstärken die Bügel lediglich noch bezüglich der durch den mittleren Bügelabschnitt definierten Achse abgewinkelt werden müssen.

Selbstverständlich kann man auch andere Abwinkelungen als 90° zwischen den entsprechenden Seilabschnitten einstellen und dabei je nach Seilstärke entweder einen flachen oder einen abgewinkelten S-Bügel verwenden.

Es versteht sich, daß die Länge der einzelnen Bügelabschnitte, insbesondere der horizontalen Bügelabschnitte mindestens in etwa dem doppelten Seildurchmesser entsprechen sollte, damit beide parallelen Seilabschnitte nebeneinander in die Augen dieses Bügels hineinpassen.

Zusätzlich sorgt an zumindest einem Ende der zusätzlich abgewinkelte Endabschnitt dafür, daß die beiden in dem betreffenden Auge aufgenommenen Seilabschnitte nicht ohne weiteres aus diesem Auge herausrutschen können.

Der Winkel zwischen den beiden Ebenen der Augen kann im Fall einer Abwinkelung zum Beispiel zwischen 5° und 50° betragen, wodurch eine große Bandbreite verschiedener Seilquerschnitte abgedeckt wäre, wenn man mit ein und derselben Bügelgröße einen 90°-Winkel zwischen den entsprechenden Abschnitten der Seilschlaufe sicherstellen will.

Die aufgrund der oben beschriebenen S-Form haben die Augen dieses S annähernd die Form von Rechtecken, die typische Seitenmaße zwischen 10 und 30 mm haben sollten. In vielen praktischen Fällen wird man mit einem entsprechenden Bügel auskommen, dessen äußere Gesamtmaße in etwa 20 x 35 bis 30 x 60 mm (Breite mal Höhe) entsprechen, d.h. das S wäre in ein Rechteck mit den vorstehend angegebenen Maßen passend einzubeschreiben.

Zweckmäßigerweise besteht ein solcher Bügel aus massivem Stahldraht mit einem Durchmesser zwischen 2 und 5 mm, zum Beispiel 3 bis 4 mm. Ein solcher Stahldraht weist auf jeden Fall eine ausreichende Stabilität und Festigkeit auf, um bei den angegebenen Maßen die hindurch passende Seilschlaufe in um 90° abgewinkelter Form sicher zu halten.

Es versteht sich, daß man für die Herstellung entsprechender Haltebügel nicht auf Stahldraht beschränkt ist, und man kann im Prinzip beliebiges, genügend formbeständiges und festes Material, wie zum Beispiel glasfaserverstärkten Kunststoff verwenden, wobei sich Rundmaterial mit einem Durchmesser zwischen 2 und 5 mm gemäß einer Ausführungsform als besonders geeignet bzw. kostengünstig erwiesen hat.

Die abgewinkelte Stahlseilschlaufe gemäß der vorliegenden Erfindung, besteht aus einem zu einer Schlaufe gebogenen Seil mit parallelen Seilabschnitten und einem entsprechenden Haltebügel, wie er in Anspruch 8 definiert ist, wobei die parallelen Seilabschnitte in den S- oder E-förmigen Haltebügel in der Weise eingelegt sind, daß sie von entgegengesetzten Enden her durch die Augen des Soder E-förmigen Bügels hindurchgeführt sind, was bei entsprechenden Abmessungen der Seilabschnitte und des Haltebügels dazu führt, daß die Ebene der Seilöse zu den durch den Haltebügel hindurchgeführten Endabschnitten des Seils rechtwinklig abgewinkelt ist.

Dabei sind also der S- oder E-förmige Haltebügel und die Seile bzw. die Seilöse derart aufeinander abgestimmt, daß die Ebene der Seilöse mit den durch den Haltebügel hindurchgeführten Seilabschnitten einen Winkel von ca. 90° einschließt. Weiterhin sollten die offenen Seiten der Augen des S- oder E-förmigen Haltebügels ausreichend groß sein, um die Seilabschnitte seitlich durch diese Öffnungen in die Augen hinein und wieder heraus bewegen zu können.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren.

Es zeigen:
- Figur 1: eine Draufsicht und eine Seitenansicht eines erfindungsgemäßen Haltebügels,
- Figur 2: eine weitere Ausführungsform eines S-förmigen Bügels,
- Figur 3: eine weitere Variante mit einem S-förmigen Haltebügel, dessen Augen zueinander abgewinkelte Ebenen definieren und
- Figur 4: eine erfindungsgemäße Kombination aus Seilschlaufe und Haltebügel.

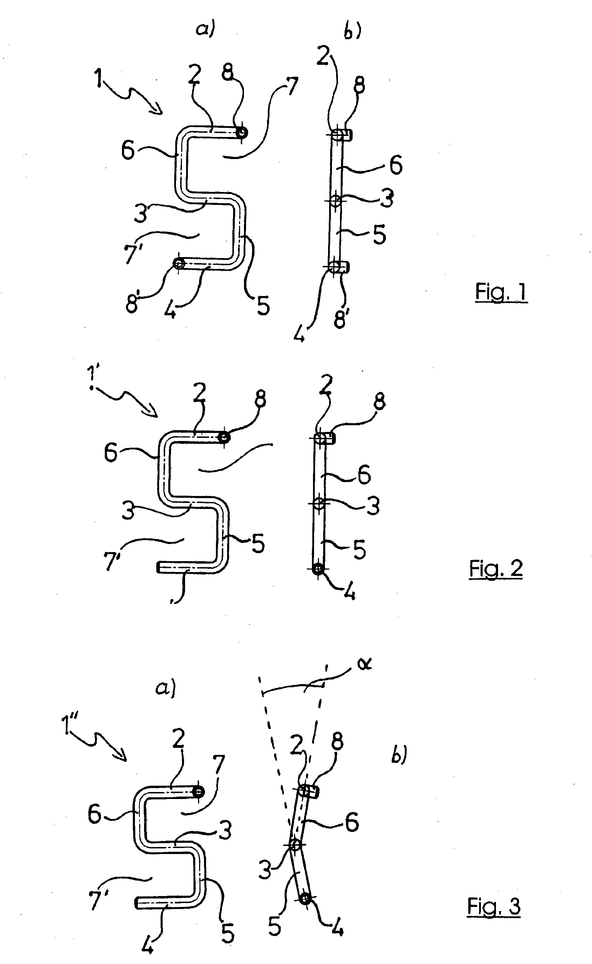

In Figur 1 a (linkes Teilbild) erkennt man einen aus einem runden Stahldraht geformten S-förmigen Haltebügel 1, der aus drei annähernd parallelen, horizontalen Bügelabschnitten 2, 3, 4 und zwei vertikalen Bügelabschnitten 5, 6 besteht, wobei der vertikale Bügelabschnitt 5 den mittleren, horizontalen Bügelabschnitt 3 mit dem hierzu parallelen unteren horizontalen Bügelabschnitt 4 zu einem in der Draufsicht in etwa rechtwinkligen Auge 7 miteinander verbindet, und der vertikale Abschnitt 6 den mittleren Bügelabschnitt 3 und den äußeren Bügelabschnitt 2 zu einem ebenfalls im wesentlichen rechtwinkligen Augen 7' verbindet, wobei die Augen 7, 7' an drei Seiten geschlossene, rechtwinklige Aussparungen definieren, die an einer Seite offen sind. Die einzelnen Bügelabschnitte 2 bis 6 verlaufen im wesentlichen geradlinig mit einer entsprechenden (teilweise vom Material des Bügels abhängigen) Biegekrümmung am Übergang zwischen horizontalen und vertikalen Abschnitten. Der Biegeradius zwischen den geradlinigen Abschnitten 2, 3, 4 einerseits und 5, 6 andererseits (in der Mitte des Materialstranges gemessen) liegt typischerweise zwischen 2 und 8 mm, vorzugsweise zwischen 2,5 und 5 mm.

Der obere horizontale Bügelabschnitt 2 und der untere horizontale Bügelabschnitt 4 weisen zusätzlich einen nochmals abgewinkelten Endabschnitt 8 bzw. 8' auf, der senkrecht zu der von den horizontalen und vertikalen Bügelabschnitten 2, 3, 6 aufgespannten Ebene ausgerichtet ist. Beide Endabschnitte 8 bzw. 8' sind dabei gegenüber der Ebene der Augen zur gleichen Seite hin abgewinkelt.

Die Ausführungsform gemäß Figur 2 unterscheidet sich von der in Figur 1 dargestellten Ausführungsform nur dadurch, daß nur das Ende des oberen Bügelabschnitts 2 mit einem aus der Ebene des betreffenden Auges 7 heraus abgewinkelten zusätzlichen Endabschnitt 8 versehen ist.

Die zusätzlichen Endabschnitte 8, 8' verhindern das Herausrutschen eines Seilabschnittes aus dem Auge 7 bzw. 7', wobei der Endabschnitt 8, 8' in der Darstellung der Figuren 1b und 2b einen beliebigen Winkel zwischen 0 und 90° mit dem Bügelabschnitt 6 bzw. 5 einschließen könnte, was tendenziell die offene Seite des Auges 7 etwas verkleinert.

In Figur 3 ist eine Variante zu der Ausführungsform nach Figur 2 dargestellt, die aber ebenso auf die Variante gemäß Figur 1 übertragen werden könnte. In der Draufsicht gemäß Figur 2a und 3a erscheinen die S-förmigen Bügel zunächst identisch, lediglich in der Seitenansicht mit einer Sichtlinie parallel zu den horizontalen Bügelabschnitten 2, 3, 4 erkennt man, daß die von den Augen 7 bzw. 7' aufgespannten Ebenen um einen Winkel α zueinander abgewinkelt sind. Diese Ausführungsform erhält man ohne weiteres durch entsprechendes Verbiegen der Ausführungsform nach Figur 1 um eine Biegeachse, die mit der Achse des mittleren horizontalen Bügelabschnitts 3 zusammenfällt.

Durch eine solche Abwinklung kann, je nach der Art der Hindurchführung der Seilabschnitte, der Winkel zwischen der eigentlichen Seilschlaufe und den Endabschnitten des Seils variiert werden oder aber es kann ein gewünschter 90°-Winkel zwischen der Ebene der Öse und den freien Enden des Seiles eingestellt werden, der sich bei einer gegebenen Seilstärke für einen nicht abgewinkelten Bügel nicht ergeben würde.

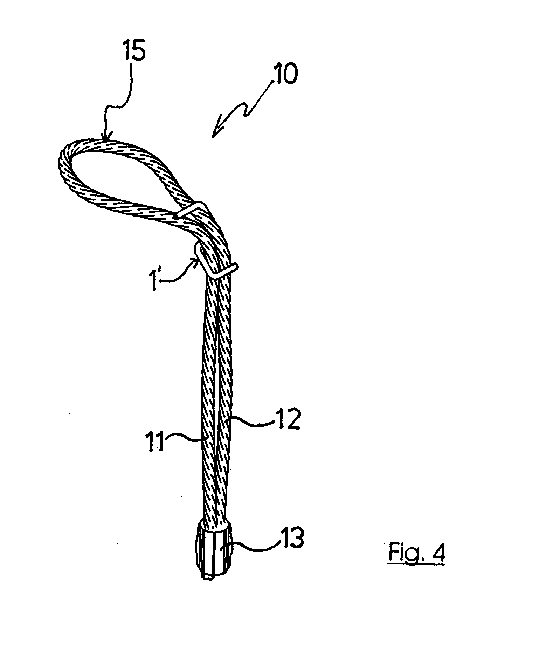

Figur 4 zeigt schließlich die Kombination einer Seilschlaufe mit dem erfindungsgemäßen Haltebügel, so daß sich insgesamt eine um ca. 90° abgewinkelte Seilschlaufe ergibt, deren freie Enden 11, 12 durch eine Quetschhülse 13 miteinander verbunden sind und die von unterschiedlichen Seiten her durch die Augen 7, 7' eines Haltebügels 1 hindurchgeführt sind, so daß die Ebene der Seilöse 15 gegenüber der Längserstreckung der Seilabschnitte 11, 12 um etwa 90° abgewinkelt ist.

Für ein dünneres Seil würde sich eine etwas kleinere Abwinklung ergeben und ein dickeres Seil, welches noch durch die Augen 7, 7' hindurchpaßt, wäre bei Verwendung desselben Bügels um mehr als 90° abgewinkelt. Durch Verwendung eines Seilschlaufenhaltes nach Figur 3 bzw. durch entsprechendes Verbiegen der Seilschlaufenhalter nach den Figuren 1 oder 2 kann aber auch für unterschiedliche Seildurchmesser der jeweilige Bügel so modifiziert werden, daß sich der im allgemeinen gewünschte 90°-Winkel zwischen Seilöse 15 und Seilenden 11, 12 einstellt.

## Patentansprüche

1. Vorrichtung für die abgewinkelte Halterung einer Stahlseilschlaufe, **dadurch gekennzeichnet, daß** sie aus einem im Wesentlichen S- oder E-förmigen Bügel (1, 1', 1") besteht, der einen mittleren (3) und zwei äußere (2, 4) im wesentlichen horizontale Bügelabschnitte sowie zwei im Wesentlichen vertikale Bügelabschnitte (5, 6) aufweist, die die drei horizontalen Bügelabschnitte (2, 3, 4) zu der S- oder E-Form miteinander verbinden, wobei mindestens eines der von dem jeweils nächstliegenden vertikalen Bügelabschnitt (5, 6) abgewandten Enden der äußeren Bügelabschnitte (2, 4) einen weiteren, gegenüber dem äußeren Bügelabschnitt (2, 4) abgewinkelten Endabschnitt (8, 8') aufweist und wobei die von dem mittleren Bügelabschnitt (3) sowie je einem vertikalen (5, 6) und je einem äußeren Bügelabschnitt (2, 4) gebildeten Augen (7, 7') des S- oder E-förmigen Bügels für die Aufnahme von je zwei parallelen Abschnitten (11, 12) eines Stahlseiles ausgelegt sind, die zu einer Seilschlaufe (10) zusammengelegt sind, wobei der mindestens eine Endabschnitt (8, 8') um ca. 90° in eine zu der Ebene des zugehörigen Auges (7, 7') senkrechten Richtung abgewinkelt ist.

2. Vorrichtung nach Anspruch 1, **dadurch gekennzeichnet, daß** die durch die Augen (7, 7') des S- oder E-förmigen Bügels (1, 1', 1") definierten Ebenen zusammenfallen.

3. Vorrichtung nach Anspruch 1, **dadurch gekennzeichnet, daß** die durch die Augen (7, 7') des S- oder E-förmigen Bügels definierten Ebenen gegeneinander abgewinkelt sind.

4. Vorrichtung nach Anspruch 3, **dadurch gekennzeichnet, daß** der Winkel (α) zwischen den Ebenen der Augen (7, 7') zwischen 5° und 50° beträgt.

5. Vorrichtung nach einem der vorstehenden Ansprüche, **dadurch gekennzeichnet, daß** die Augen (7, 7') annähernd rechteckige Abmessungen mit Seitenmaßen zwischen 10 und 30 mm haben.

6. Vorrichtung nach einem der vorstehenden Ansprüche, **dadurch gekennzeichnet, daß** die Bügel (1, 1', 1") aus massivem Stahldraht oder aus faserverstärktem Kunststoff bestehen.

7. Vorrichtung nach einem der vorstehenden Ansprüche, **dadurch gekennzeichnet, daß** die Bügel aus Rundmaterial mit einem Durchmesser zwischen 2 und 5 mm bestehen.

8. Abgewinkelte Stahlseilschlaufe, bestehend aus einem zu einer Schlaufe (10) gebogenen Stahlseil mit parallelen Seilabschnitten (11, 12) **dadurch gekennzeichnet, dass** für eine abgewinkelte Halterung der Stahlseilschlaufe ein im Wesentlichen S- oder E-förmiger Bügel (1, 1', 1) vorgesehen ist, der einen mittleren (3) und zwei äußere (2, 4) im wesentlichen horizontale Bügelabschnitte sowie zwei im Wesentlichen vertikale Bügelabschnitte (5, 6) aufweist, die die drei horizontalen Bügelabschnitte (2, 3, 4) zu der S- oder E-Form miteinander verbinden, wobei mindestens eines der von dem jeweils nächstliegenden vertikalen Bügelabschnitt (5, 6) abgewandten Enden der äußeren Bügelabschnitte (2, 4) einen weiteren, gegenüber dem äußeren Bügelabschnitt (2, 4) abgewinkelten Endabschnitt (8, 8') aufweist, wobei die von dem mittleren Bügelabschnitt (3) sowie je einem vertikalen (5, 6) und je einem äußeren Bügelabschnitt (2, 4) gebildeten Augen (7, 7') für die Aufnahme von je zwei parallelen Abschnitten (11, 12) eines Stahlseiles ausgelegt sind und wobei der mindestens eine Endabschnitt (8, 8') um ca. 90° in eine zu der Ebene des zugehörigen Auges (7, 7') senkrechten Richtung abgewinkelt ist, wobei die parallelen Seilabschnitte (11, 12) an einem Ende der Schlaufe in der Weise eingelegt sind, daß sie von entgegengesetzten Seiten her durch die Augen (7, 7') des S- oder E-förmigen Bügels hindurchgeführt sind, so daß die Ebene der von der Stahlseilschlaufe (10) gebildeten Seilöse (15) mit den durch den Haltebügel (1, 1', 1") hindurchgeführten Seilabschnitten (11, 12) einen Winkel von ca. 90° einschließt.

9. Abgewinkelte Seilschlaufe nach Anspruch 8, **dadurch gekennzeichnet, daß** die offenen Seiten der Augen (7, 7') des S- oder E-förmigen Haltebügels (1, 1', 1") groß genug sind, um die Seilabschnitte (11, 12) seitlich durch diese Öffnungen in die Augen (7, 7') hinein- und wieder heraus bewegen zu können.

## Claims

1. Device for angled mounting of a steel cable loop, **characterized in that** it consists of an essentially S- or E-shaped bracket (1, 1', 1"), which comprises a central (3) and two outer (2, 4) essentially horizontal bracket sections as well as two essentially vertical bracket sections (5, 6), which connect the three horizontal bracket sections (2, 3, 4) to the S- or E-shaped form, wherein at least one of each of the ends of the outer bracket sections (2, 4) facing away from a respective adjacent vertical bracket section (5, 6) comprises a further end section (8, 8') which is angled with respect to the outer bracket section (2, 4) and wherein the eyes (7, 7') of the S- or E-shaped bracket formed by the central bracket section (3) as well as by each a vertical (5, 6) and an outer bracket section (2, 4) are designed for receiving of each two parallel sections (11, 12) of a steel cable which are folded together to a steel cable loop (10), wherein the at least one end section (8, 8') is angled by about 90° in a direction perpendicular to the plane of the respective eye (7, 7").

2. Device according to claim 1, **characterized in that** the planes defined by the eyes (7, 7') of the S- or E-shaped bracket (1, 1', 1") coincide.

3. Device according to claim 1, **characterized in that** the planes defined by the eyes (7, 7') of the S- or E-shaped bracket are angled with respect to each other.

4. Device according to claim 3, **characterized in that** the angle (α) between the planes of the eyes (7, 7') is between 5° and 50°.

5. Device according to one of the preceding claims, **characterized in that** the eyes (7, 7') have almost rectangular dimensions with side lengths between 10 and 30 mm.

6. Device according to one of the preceding claims, **characterized in that** the brackets (1, 1', 1") are made of massive steel wire or of fiber-reinforced plastics.

7. Device according to one of the preceding claims, **characterized in that** the brackets consist of round material with a diameter of between 2 and 5 mm.

8. Angled steel cable loop, consisting of a steel cable folded to a loop (10) with parallel cable sections (11, 12), **characterized in that** an essentially S- or E-shaped bracket (1, 1', 1") is provided for an angled mounting of the steel cable loop, which comprises a central (3) and two outer (2, 4) essentially horizontal bracket sections as well as two essentially vertical bracket sections (5, 6), which connect the three horizontal bracket sections (2, 3, 4) to the S- or E-shaped form, wherein at least one of each of the ends of the outer bracket sections (2, 4) facing away from a respective adjacent vertical bracket section (5, 6) comprises a further end section (8, 8') which is angled with respect to the outer bracket section (2, 4), wherein the eyes (7, 7') formed by the central bracket section (3) as well as by each a vertical (5, 6) and an outer bracket section (2, 4) are designed for receiving of each two parallel sections (11, 12) of a steel cable and wherein the at least one end section (8, 8') is angled by around 90° in a direction perpendicular to the plane of the respective eye (7, 7'), wherein the parallel cable sections (11, 12) are inserted at one end of the loop in such a way that they are guided through the eyes (7, 7') of the S- or E-shaped bracket from opposite sides so that the plane of the becket (15) formed by the steel cable loop (10) defines an angle of about 90° with the cable sections (11, 12) fed through the retaining bracket (1, 1', 1 ").

9. Angled cable loop according to claim 8, **characterized in that** the open sides of the eyes (7, 7') of the S- or E-shaped retaining bracket (1, 1', 1") are large enough in order to be able to move the cable sections (11, 12) sidewards through the openings in and out of the eyes (7, 7').

## Revendications

1. Dispositif pour maintenir courbée une boucle de câble d'acier, **caractérisé en ce qu'**il consiste en un crochet globalement en forme de S ou de E (1, 1', 1") qui comporte un tronçon de crochet médian (3) globalement horizontal et deux tronçons de crochet externes (2, 4) globalement horizontaux ainsi que deux tronçons de crochet (5, 6) globalement verticaux qui réunissent les trois tronçons de crochet horizontaux (2, 3, 4) en une forme de S ou de E, au moins l'une des extrémités, éloignées du tronçon de crochet vertical respectivement le plus proche (5, 6), des tronçons de crochet externes (2, 4) comportant un autre tronçon terminal (8, 8') coudé par rapport au tronçon de crochet externe (2, 4) et les oeillets (7, 7'), formés par le tronçon de crochet médian (3) ainsi que par à chaque fois un tronçon de crochet vertical (5, 6) et à chaque fois un tronçon de crochet externe (2, 4), du crochet en forme de S ou de E étant conçus pour recevoir à chaque fois deux tronçons parallèles (11, 12) d'un câble d'acier qui sont réunis en une boucle de câble (10), l'au moins un tronçon terminal (8, 8') étant coudé d'environ 90° dans une direction perpendiculaire au plan de l'oeillet associé (7, 7').

2. Dispositif selon la revendication 1, **caractérisé en ce que** les plans définis par les oeillets (7, 7') du crochet en forme de S ou de E (1, 1', 1") coïncident.

3. Dispositif selon la revendication 1, **caractérisé en ce que** les plans définis par les oeillets (7, 7') du crochet en forme de S ou de E (1, 1', 1") sont coudés l'un par rapport à l'autre.

4. Dispositif selon la revendication 3, **caractérisé en ce que** l'angle (α) entre les plans des oeillets (7, 7') est compris entre 5° et 50°.

5. Dispositif selon l'une des revendications précédentes, **caractérisé en ce que** les oeillets (7, 7') ont approximativement des dimensions rectangulaires avec des dimensions des côtés comprises entre 10 et 30 mm.

6. Dispositif selon l'une des revendications précédentes, **caractérisé en ce que** les crochets (1, 1', 1") sont en fil d'acier massif ou en plastique renforcé par des fibres.

7. Dispositif selon l'une des revendications précédentes, **caractérisé en ce que** les crochets sont en un matériau rond d'un diamètre compris entre 2 et 5 mm.

8. Boucle de câble d'acier courbée, constituée d'un câble d'acier plié en une boucle (10) et comportant des tronçons de câble parallèles (11, 12), **caractérisée en ce que**, pour maintenir courbée la boucle de câble d'acier, il est prévu un crochet (1, 1', 1") globalement en forme de S ou de E qui comporte un tronçon de crochet médian (3) globalement horizontal et deux tronçons de crochet externes (2, 4) globalement horizontaux ainsi que deux tronçons de crochet (5, 6) globalement verticaux qui réunissent les trois tronçons de crochet horizontaux (2, 3, 4) en une forme de S ou de E, au moins l'une des extrémités, éloignées du tronçon de crochet vertical respectivement le plus proche (5, 6), des tronçons de crochet externes (2, 4) comportant un autre tronçon terminal (8, 8') coudé par rapport au tronçon de crochet externe (2, 4), les oeillets (7, 7') formés par le tronçon de crochet médian (3) ainsi que par à chaque fois un tronçon de crochet vertical (5, 6) et à chaque fois un tronçon de crochet externe (2, 4) étant conçus pour recevoir à chaque fois deux tronçons parallèles (11, 12) d'un câble d'acier et l'au moins un tronçon terminal (8, 8') étant coudé d'environ 90° dans une direction perpendiculaire au plan de l'oeillet associé (7, 7'), les tronçons de câble parallèles (11, 12) à une extrémité de la boucle étant placés de telle sorte que, à partir de côtés opposés, ils passent à travers les oeillets (7, 7') du crochet en forme de S ou de E de telle sorte que le plan de l'attache (15) formée par la boucle de câble d'acier (10) forme avec les tronçons de câble (11, 12) passant à travers le crochet de maintien (1, 1', 1") un angle de 90° environ.

9. Boucle de câble d'acier courbée selon la revendication 8, **caractérisée en ce que** les côtés ouverts des oeillets (7, 7') du crochet de maintien (1, 1', 1") en forme de S ou de E sont suffisamment grands pour que les tronçons de câble (11, 12) puissent être introduits dans les oeillets (7, 7') et ressortis de ceux-ci latéralement à travers ces ouvertures.
